# EUROPÄISCHE PATENTSCHRIFT

(11) **EP 2 060 640 B1**
(45) Veröffentlichungstag und Bekanntmachung des Hinweises auf die Patenterteilung: **18.05.2011**
(21) Anmeldenummer: 08167410.3
(22) Anmeldetag: 23.10.2008
(51) Int. Cl.: C21C 7/076, B22D 11/111

(54) **Feuerfeste Leichtgranalien sowie Verfahren zu ihrer Herstellung**
Fire-resistant light granules and method of their production
Granulés légers ignifuges et leur procédé de fabrication

(30) Priorität: 06.11.2007 DE 102007052815
(43) Veröffentlichungstag der Anmeldung: 20.05.2009
(73) Patentinhaber: Refratechnik Holding GmbH, 85737 Ismaning (DE)
(72) Erfinder: Ackermann, Andreas, 80634 München (DE); Beimdiek, Kai, 37083 Göttingen (DE)
(74) Vertreter: Solf, Alexander

(56) Entgegenhaltungen:
- WO-A-2004/054742
- DE-A1- 3 804 279
- DE-A1- 4 230 161
- DE-A1- 10 360 508
- DE-C1- 3 742 415
- JP-A- 57 057 824
- SCHWERDTFEGER K ED - SCHWERDTFEGER K: "Metallurgie des Stranggiessens, PASSAGE" METALLURGIE DES STRANGGIESSENS. GIESSEN UND ERSTARREN VON STAHL, DUSSELDORF, VERLAG STAHLEISEN, DE, 1. Januar 1991 (1991-01-01), Seiten 232-237, XP002264211

## Beschreibung

Die Erfindung betrifft feuerfeste Leichtgranalien aus mindestens einem feuerfesten Werkstoff. Die Erfindung betrifft außerdem ein Verfahren zur Herstellung der Granalien.

Granalien im Sinne der Erfindung sind aus Mehlen mit einem Bindemittel oder Lösungsmittel durch Aufrollen hergestellte Körner, die auch als Pellets bezeichnet werden. Ein Granulat besteht aus einer Vielzahl von Granalien gleicher oder unterschiedlicher Korngrößen, die ein Kornband bzw. eine Kornfraktion bilden. Der Begriff "Mehl" ist im Rahmen der Erfindung gleichbedeutend mit dem Begriff "Pulver". Es handelt sich um Korngemenge mit Korngrößen < 500 µm, insbesondere < 90µm, vorzugsweise < 63µm.

Feuerfest im Sinne der Erfindung meint, dass die Leichtgranalien eine thermische Eigenfestigkeit bei Anwendungstemperaturen > 800°C, insbesondere auch noch > 1300°C ohne Zerstörung gewährleisten. Die Anwendungsgrenze ist abhängig vom verwendeten Werkstoff.

Feuerfeste Werkstoffe, aus denen erfindungsgemäße Leichtgranalien herstellbar sind oder aus denen sie bestehen, sind feuerfeste Grundstoffe, wie die feuerfesten Grundoxide SiO₂, Al₂O₃, MgO, CaO, Cr₂O₃ und ZrO₂ sowie feuerfeste Kohlenstoffmodifikationen und die Verbindungen aus den feuerfesten Grundstoffen. Diese feuerfesten Werkstoffe werden beschrieben in Gerald Routschka, Feuerfeste Werkstoffe, 3. Aufl, Vulkan-Verlag Essen, S. 2 (Grundstoffpyramide), sowie S. 4 und 5.

Feuerfeste Werkstoffe, aus denen erfindungsgemäße Leichtgranalien herstellbar sind, sind zudem gemahlene, aus feuerfesten Grundstoffen hergestellte feuerfeste Erzeugnisse, z.B. gemahlenes Abfall- oder Recyclingmaterial aus ungebrannten oder gebrannten feuerfesten Erzeugnissen.

Des Weiteren können als Werkstoffe zur Herstellung der erfindungsgemäßen Leichtgranalien Rohstoffe zur Herstellung von feuerfesten Erzeugnissen verwendet werden. Die Rohstoffe und die feuerfesten Erzeugnisse werden z.B. im Routschka aaO. S. 30 bis 37 beschrieben. Ferner können als Werkstoffe natürlich Carbonate wie Calciumcarbonat (Kalkstein), Magnesit oder Dolomit eingesetzt werden, die u.a. auch die Rohstoffbasis für eine Reihe von feuerfesten Baustoffen darstellen. Im Rahmen der Erfindung können aber auch Gemenge aus mindestens zwei verschiedenen Werkstoffen zur Herstellung der feuerfesten Leichtgranalien verwendet werden.

Bekannt sind porosierte feuerfeste Feuerleichtprodukte aus feuerfesten Werkstoffen. Es handelt sich dabei um wärmedämmende Werkstoffe (Routschka aaO.,S. 303 bis 332). Die Herstellung der Feuerleichtprodukte erfolgt in einer Form u.a. durch Gastreibverfahren z. B. durch die Verwendung von Dolomit und Schwefelsäure unter Bildung von CO₂ (Routschka aaO. S. 308/309).

Bekannt sind zudem feuerfeste Leichtgranulate aus durch Granulieren in Granulatoren erzeugten Granalien aus Reisschalenasche oder aus porosierten Calciumaluminaten. Für die Porosierung der Calciumaluminate werden Ausbrennstoffe und/oder Bindemittel verwendet, die im anschließenden keramischen Brand ausbrennen und Poren hinterlassen (DE 10 259 335 B4).

Bekannt ist ein weiteres Granulierverfahren zur Herstellung porosierter feuerfester Granalien, bei dem ein feinkörniger feuerfester Werkstoff, z. B. Olivin, und ein Bindemittel gemischt und die Mischung mit Hilfe eines rotierenden Pelletiertellers unter Zugabe von Wasser, z. B. in Form von Wassernebel, zu Pellets geformt werden, wobei die Mischung vor dem Pelletieren mit einem Wirbler porig aufgelockert und die porige aufgelockerte Mischung pelletiert und getrocknet wird (DE 37 42 415 C1).

Aufgabe der Erfindung ist, auf einfache Weise thermisch stabile feuerfeste Leichtgranulate mit rohstoff- und fraktionsabhängigen Schüttgewichten, bestimmt nach DIN 51110, unter 1000 kg/m³ für Anwendungstemperaturen > 800°C zu schaffen, wobei die Granalienporosität über 30, insbesondere über 45 Vol.-% betragen soll.

Diese Aufgabe wird durch die Merkmale des Anspruchs 1 und 25 gelöst. Vorteilhafte Weiterbildungen der Erfindung werden in den Unteransprüchen gekennzeichnet.

Die Erfindung sieht eine gasbildende chemische Reaktion während des in einem Granulator stattfindenden Granulierens, insbesondere Nassgranulierens, vor, wobei in der granulierenden Masse eine Gasphasenreaktion abläuft, die in der Masse eine bleibende stabile Gasblasenstruktur entwickelt, die durch eine gleichzeitig während des Granulierens oder danach entstehende feste Steggerüststruktur aus Bindemittel und Werkstoff umgeben und konserviert bzw. "eingefroren" und durch den Granuliervorgang nicht signifikant beeinträchtigt wird. Die offenen und/oder geschlossenen Hohlräume der Gasblasen sind in der Granalie als Matrixbestandteil von der verfestigten Bindemittel/Werkstoff-Steggerüststruktur umschlossen.

Beim erfindungsgemäßen Verfahren kommt es somit darauf an, die Verfahrensbedingungen so einzustellen, dass die Leichtgranalien nach Verlassen des Granulators im wesentlichen durch eine Gasblasenstruktur porosiert sind und durch das erstarrte oder erhärtete Bindemittel eine ausreichende Eigenfestigkeit aufweisen. Diese Grünfestigkeit kann sich durch eine weitergehende temporäre und/oder thermisch bedingte Erhärtung des Bindemittels erhöhen, z. B. bei Verwendung von hydraulischen Bindemitteln, oder eine Temperung und/oder durch einen keramischen Brand erhöht werden.

Die Gasblasengröße und die Gasblasenmenge können auf einfache Weise und sehr genau durch die Menge der Gas bildenden Reaktionsmittel gesteuert werden, so dass dementsprechend das Schüttgewicht gesteuert werden kann.

Die erfindungsgemäßen Leichtgranalien haben eine charakteristische Gasblasenstruktur, die einen hohen, insbesondere überwiegenden Anteil kleiner geschlossener Poren, insbesondere auch Kugelporen aufweist, wobei diese Gasblasenstruktur eine im Vergleich zu kapillar zusammenhängenden bzw. über Porenkanäle miteinander in Verbindung stehenden Porenstrukturen, die aus Ausbrennstoffen resultieren, höhere Festigkeiten der Granalien gewährleistet.

Für das erfindungsgemäße Granulierverfahren werden insbesondere handelsübliche Granulatoren verwendet, die nach dem Nassgranulierverfahren arbeiten und deren Verfahrensprinzip das Aufrollen von Mehlpartikeln zu Granalien über Flüssigkeitsbrücken ermöglicht, wobei die Flüssigkeitsbrücken vorzugsweise bereits ein erhärtendes Bindemittel aufweisen. Die Granulatoren ermöglichen vorzugsweise ein Eindüsen und/oder ein Einsprühen von Flüssigkeiten und/oder gasförmigen Medien z.B. Wasserdampf. Solche Granulatoren sind z.B. Granulier- bzw. Pelletierteller und Granulier- bzw. Pelletiermischer sowie Pelletiertrommeln.

Zur Herstellung der erfindungsgemäßen feuerfesten Granaliengranulate werden Mehle von feuerfesten Werkstoffen verwendet. Diese Mehle werden zur Porosierung mit chemischen Reaktionsmitteln in Form von mindestens einem pulverförmigen Reaktionsstoff, sofern die Mehle nicht selbst Reaktionsstoffe sind oder bereits Reaktionsstoffe enthalten, und mit mindestens einem pulverförmigen Reaktionspartnerstoff versetzt. Die Reaktionsstoffe enthalten Carbonate oder sind Carbonate. Die Reaktionspartnerstoffe weisen chemische Verbindungen auf, die mit den Reaktionsstoffen derart reagieren, dass gasförmiges CO₂ bei Raumtemperatur oder höheren Temperaturen, z.B. bis 150°C erhöhten Temperaturen, abgespalten wird. Die Reaktionspartnerstoffe können aber auch flüssig verwendet werden, wobei die Zuführung zu den Reaktionsstoffen durch Zumischen und/oder Zudüsen und/oder Zusprühen einer Flüssigphase während des Granulierens erfolgt.

Es liegt auch im Rahmen der Erfindung, die Reaktionsstoffe über eine zugedüste und/oder als Nebel zugesprühte Flüssigphase während des Granulierens als Suspension zuzuführen, wobei dabei zudem eine Variante der Erfindung vorsieht, die Reaktionspartnerstoffe in Pulverform den feuerfesten Werkstoffen beizugeben. Im Rahmen der Erfindung liegt außerdem, mindestens eine Teilmenge mindestens eines Reaktionsmittels in Pulverform den feuerfesten Werkstoffen zuzusetzen und mindestens eine zusätzliche Teilmenge mindestens eines Reaktionsmittels in einer flüssigen Phase während des Granulierens zuzuführen, wobei die jeweiligen Reaktionsmittel unterschiedlich sein können. Somit kann zweckmäßigerweise ein bestimmter Reaktionsstoff und/oder Reaktionpartnerstoff in Pulverform und der gleiche oder ein anderer gleich wirkender Reaktionsstoff und/oder Reaktionspartnerstoff in einer flüssigen Phase demselben Granulierprozess zugegeben werden.

Mit diesen Varianten können insbesondere die Korngröße, die Weite der Korngrößenverteilung, die Porosität und die Festigkeit der Granalien auf einfache Weise gesteuert werden.

Zur Herstellung der erfindungsgemäßen feuerfesten Granaliengranulate wird außerdem mindestens ein Bindemittel verwendet, sofern die Reaktionsmittel nicht synergistisch schon eine Bindemittelfunktion gewährleisten oder keine ausreichende Bindemittelfunktion zur Verfügung stellen. Die Bindemittel können pulverförmig sein und den feuerfesten Werkstoffen beigemengt oder in einer Flüssigphase zugedüst und/oder als Nebel zugesprüht werden.

Zur Herstellung der erfindungsgemäßen feuerfesten Granulate wird in jedem Fall Wasser und/oder mindestens eine wässrige Lösung und/oder eine wässrige Suspension dem Granuliergemenge zugedüst und/oder zugesprüht, wobei erfindungsgemäß mit Granulierfeuchten der Granalien bis 30 Gew.-%, vorzugsweise zwischen 10 und 15 Gew.-% gearbeitet wird. Die Temperatur der in den Granulator eingesprühten und/oder eingedüsten flüssigen Phase liegt in der Regel bei Raumtemperatur. Vorteilhaft ist, höhere Temperaturen bis z.B. 100°C vorzusehen. Besonders gute Ergebnisse werden erzielt, wenn Wasserdampf, z.B. Heißdampf, insbesondere Sattdampf mit Temperaturen zwischen 100 und 150°C verwendet wird, weil dadurch die Reaktionsfähigkeit und Reaktionsgeschwindigkeit erhöht wird und damit die Porosierung und die Korngröße sowie die Weite der Kornverteilung besonders effektiv gesteuert werden können, sowie die Gefahr der Granalienverklumpung (Agglomeration, Brombeereffekte) durch ein günstiges Tropfen-/Partikelgrößenverhältnis vermieden werden kann.

Reaktionsstoffe sind z.B. Mehle aus Kalkstein (CaCO₃), Magnesit (MgCO₃) und Dolomit (CaMgO(CO₃)₂) sowie Natriumcarbonat (Na₂CO₃) Natriumhydrogencarbonat (NaHCO₃), Magnesiumhydrogencarbonat, Ammoniumcarbonat (NH₄)₂CO₃ und Ammoniumhydrogencarbonat (NH₅CO₃).

Reaktionspartnerstoffe sind z.B. die wasserlöslichen Pulver und/oder wässrige Lösungen von Zitronensäure, Oxalsäure, Borsäure, Weinsäure, Apfelsäure und zudem flüssige Essigsäure.

Bindemittel sind z.B. Mehle und/oder Suspensionen von Bindetonen, Tonerdezementen, Portlandzementen, Wasserglas, insbesondere Natronwasserglas, Novolakharze, Pechbinder, Zucker, Stärke, wie Reisstärke, Maisstärke und Kartoffelstärke, Mikrosilika, Phosphate, insbesondere Aluminiumphosphate, Phosphorsäure, Borsäure, Magnesiumchlorid, Magnesiumsulfat, Polyvinylalkohol, Silika-Gel, Ethylsilikat, Wachse und/oder Sulfidablauge.

In überraschender Weise wirken auch die Reaktionspartnerstoffe Zitronensäure und Lävulinsäure pulvrig und/oder als wässrige Lösungen während des Granulierens als Bindemittel, indem diese Stoffe mit den Reaktionsstoffen nicht nur CO₂ entwickeln, sondern auch verfestigende bzw. stützende Gelstrukturen um die Poren herum bilden, die möglicherweise aus Reaktionsprodukten aus den Säuren mit den Reaktionsstoffen und/oder den feuerfesten Werkstoffen resultieren, so dass die Verwendung eines zusätzlichen anderen Bindemittels zwar möglich aber nicht unbedingt erforderlich ist.

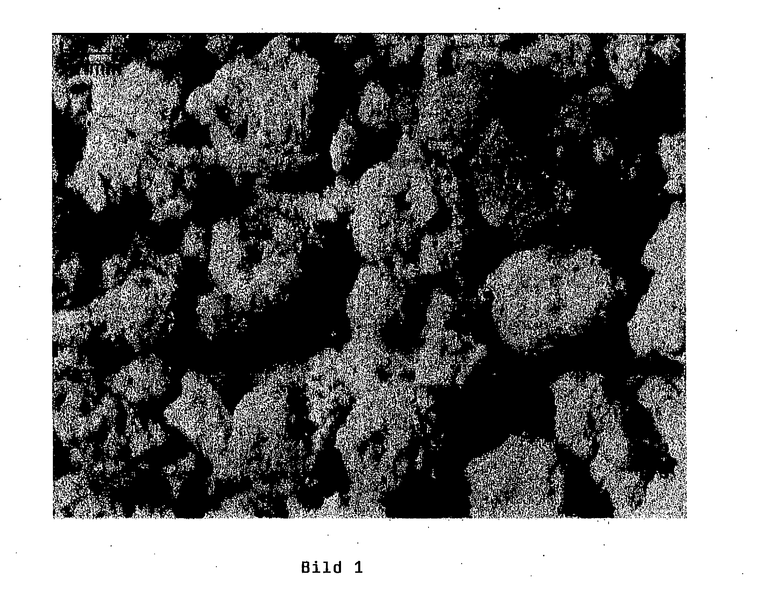

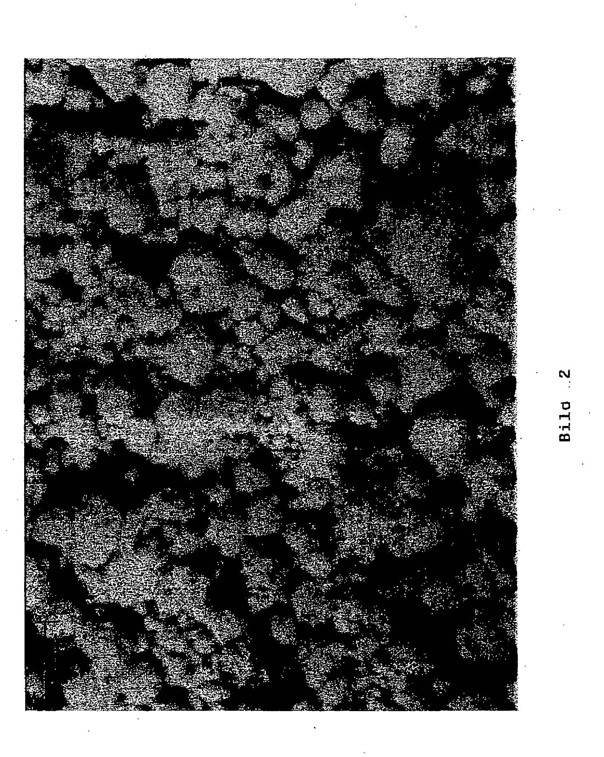

Die Reaktionsmittel, bestehend aus den Reaktionsstoffen und den Reaktionspartnerstoffen, werden vorzugsweise jeweils zumindest in stöchiometrischen Mengen verwendet, wobei während der Reaktion beim Granulieren dafür gesorgt wird, dass die chemische Reaktion vollständig abläuft, d.h. die CO₂-Gasbildung vollständig erfolgt, und zwar in einem Zeitraum, währenddessen die Plastizität bzw. die plastische Konsistenz oder Gelbildung der granulierenden Masse eine Gasbildung und eine Ausdehnung der Gasblasen in der Masse kontinuierlich zulässt und dennoch gleichzeitig ein weitergehender Granulierprozess erfolgt, d.h. die Granalien gleichzeitig sowohl durch die Gasblasenbildung und Gasblasenausdehnung als auch durch die Werkstoffmaterialaufnahme aus den feuerfesten Werkstoffmehlen wachsen. Währenddessen werden zudem die Werkstoffpulverteilchen über Feuchtigkeitsbrücken und sich anschließende Bindemittelbrücken aneinander gebunden und/oder in einer Gelstruktur abgestützt, wobei die Bindemittelwerk-stoffteilchenmatrix und/oder die Gelstruktur durchsetzt ist mit kleinen Poren bis 200 µm Durchmesser und großen Poren ab 200 µm bis 600 µm Durchmesser, die aus der Gasbildungsreaktion der Reaktionsmittel resultieren. Das aus dem Granulierprozess abgeführte fertige, erfindungsgemäße, feuerfeste Leichtgranaliengranulat weist ein breites Kornband und eine hochporöse sogenannte "Brombeer"-Struktur auf (Bild 1), wenn das Wasser oder die wässrigen Lösungen als Nebel eingedüst und/oder eingespritzt werden. Bei Verwendung von Heißdampf oder Sattdampf entstehen in der Regel engere Kornbänder und eine bessere Vereinzelung der Granalien, die meist kleinere Korndurchmesser aufweisen (Bild 2).

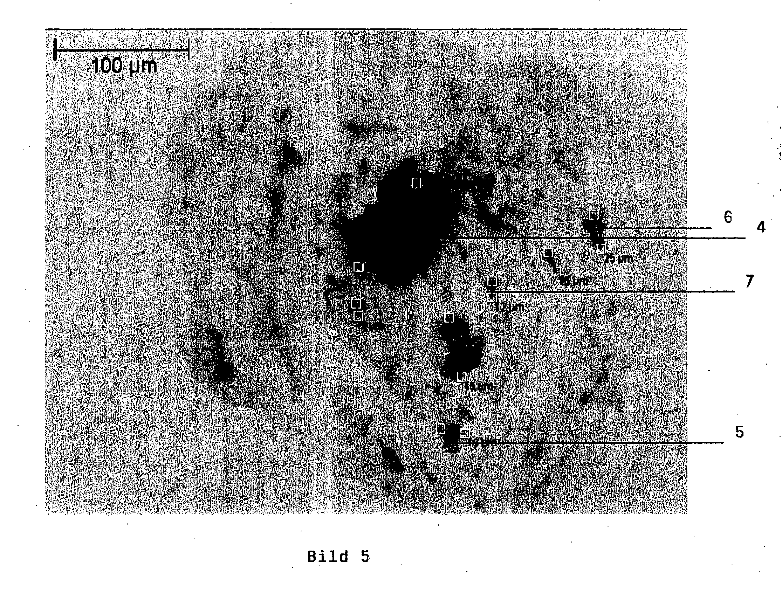

Überraschend ist, dass in beachtlichem Umfang eine Granalienstruktur erzeugt wird, bei der während des Granulierens nach Art einer Umhüllung eine größere Pore von Feststoffstegen umgeben wird, in denen kleinere Poren, insbesondere Kugelporen angeordnet sind. Diese wachsende Feststoffumhüllung hat sich offensichtlich nicht um einen Feststoffkern, sondern durch Anwachsen von Feststoffteilchen um eine abgeschlossene bzw. umhüllte Pore gebildet, wobei die Dicke der Feststoffhülle während des Granulierprozesses anwächst und wobei dabei in der Feststoffhülle sich eine Mikroporosität mit den kleinen Poren überwiegend aufgrund der Gasentwicklung aufbaut. Demgemäß weist eine erfindungsgemäße feuerfeste Leichtgranalie häufig im Zentrum eine große Pore und in der umgebenden Hülle feine, kleine Poren auf (Bild 5). Diese neue Struktur einer durch eine Gasbildungsreaktion porosierten Leichtgranalie ist für nach dem erfindungsgemäßen Verfahren erzeugte Granalien charakteristisch.

Das erfindungsgemäße Granulieren wird insbesondere mit Reaktionsmitteln durchgeführt, die in folgenden Mengen, auf trockene pulverförmige Stoffe bezogen, verwendet werden:
Reaktionsstoffe:
   75 bis 99 Gew.-%, insbesondere 80 bis 97 Gew.-%
Reaktionspartnerstoffe:
   1 bis 15 Gew.-%, insbesondere 3 bis 10 Gew.-%
Bindemittel:
   0 bis 10 Gew.-%, insbesondere 1 bis 5 Gew.-%

Vorzugsweise wird als Reaktionsstoff Kalksteinmehl und/oder Natriumcarbonat und/oder Natriumhydrogencarbonat verwendet.

Bevorzugte Reaktionspartnerstoffe sind Zitronensäure und/oder Oxalsäure und/oder Lävolinsäure.

Als Bindemittel werden insbesondere verwendet Zemente und/oder Mikrosilika und/oder Wasserglas und/oder Zitronensäure.

Es liegt im Rahmen der Erfindung, ausschließlich aus den angegebenen Reaktionsmittelzusammensetzungen erfindungsgemäße Granalien zu erzeugen. Im Falle der Beigabe zu feuerfesten Werkstoffen werden die Reaktionsmittel mindestens mit Mengen von 76 bis 100 insbesondere von 83 bis 97 Gew.-% verwendet.
Bild 1 zeigt ein erfindungsgemäßes "Brombeer"-GranalienHaufwerk und
Bild 2 ein Granalienhaufwerk, bei dem die Granalien kleiner ausgebildet sind und überwiegend als Einzelkörner vorliegen.

Die in Bild 1 und 2 dargestellten Granalien wurden hergestellt aus einem Gemenge aus den Werkstoffen Kalksteinmehl (CaCO₃) mit Korngrößen < 90 µm, denen als Reaktionspartnerstoff Zitronensäurepulver < 90 µm in einer Menge von 10 Gew.-% zugemischt wurde, wobei als Reaktionsstoff eine Teilmenge des Kalksteinmehls vorgesehen war. Das trockene Gemenge wurde in einen Nassgranulator in Form eines Granuliertellers gegeben und bei der einen Ausführungsform durch Zusprühen von Wasser (Bild 1) und in der anderen Ausführungsform durch Zudüsen von Wasserdampf mit einer Temperatur von etwa 110°C granuliert (Bild 2). Die Granulierdauer war bei beiden Ausführungsformen gleich. Die Granalien wiesen eine relativ hohe Grünfestigkeit auf, die aus einer Gelstruktur resultierte, deren Zusammensetzung noch nicht erkannt worden ist.

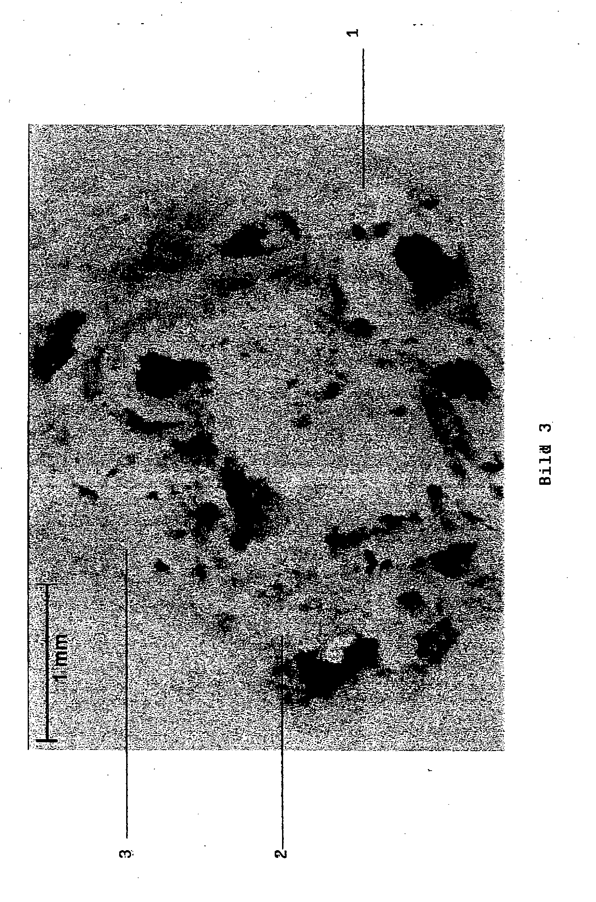

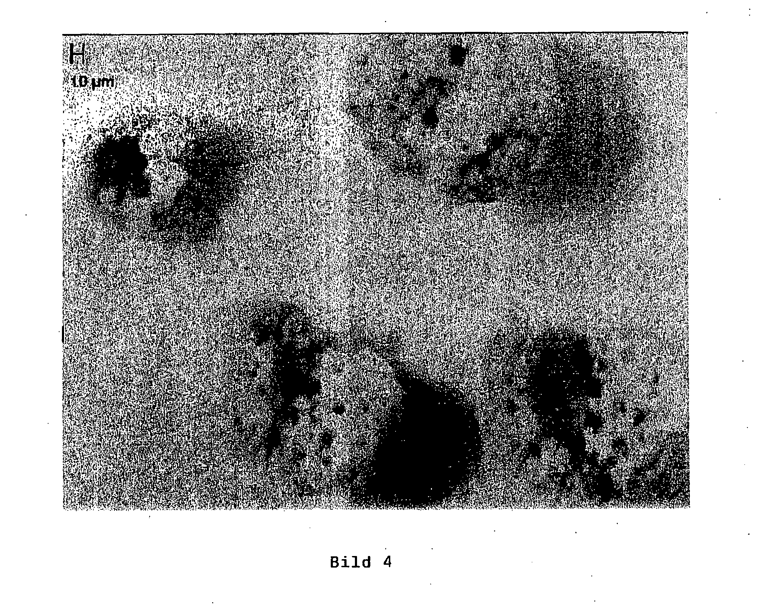

Deutlich größere Granalien ergibt das Zusprühen von Wasser wie Bild 1 erkennen lässt im Vergleich zu Bild 2, auf dem wesentlich kleinere Granalien zu sehen sind. Auch die Struktur der Granalien ist etwas unterschiedlich. Während, wie Bild 3 zeigt, bei den mittels H₂O-Sprühen hergestellten Granalien mehrere Einzelgranalien 1, 2, 3 zusammengewachsen sind, liegen die Granalien, die mittels Heißdampf erzeugt wurden, überwiegend als einzelne Granalienkörner vor (Bild 4). Sowohl die Granalienteile 1, 2 und 3 nach Bild 3 als auch die Einzelgranalien nach Bild 4 weisen - wie Bild 5 zeigt - bei der überwiegenden Mehrzahl (über 50 %) im Kern eine relativ große Pore 4 und im die Pore umgebenden Feststoffmaterial relativ kleine Poren 5, 6, 7 auf.

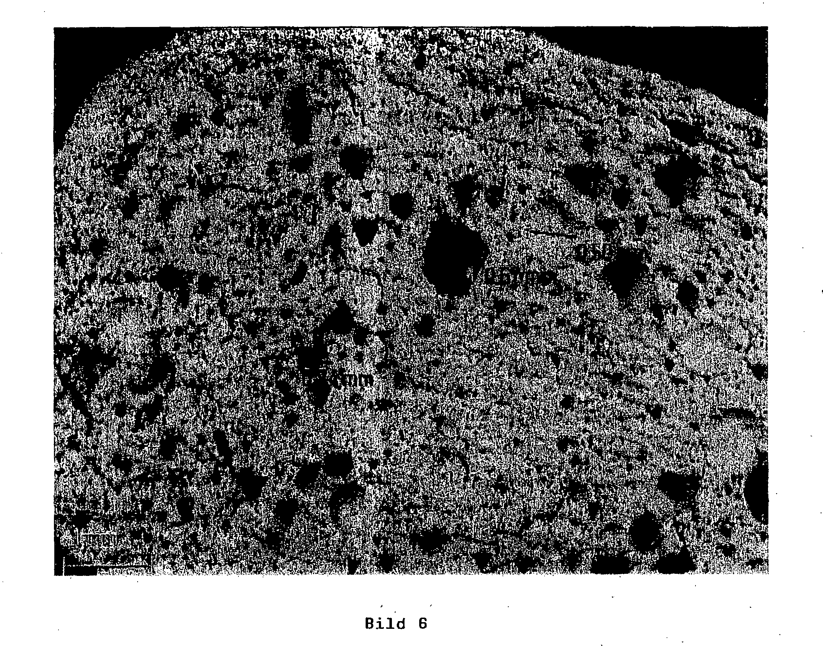

Bild 6 zeigt die Struktur einer angeschliffenen erfindungsgemäßen Granalie, die bei 1250°C keramisch gebrannt worden ist und deren Gerüst aus Calciumaluminat besteht. Die Granalie ist mit Mikro- und Makroporen durchsetzt, die überwiegend aus der beim Granulieren herbeigeführten Gasbildungsreaktion resultieren.

Nach einer besonderen Ausführungsform der Erfindung wird beim Granulieren neben der Entwicklung einer Gelstruktur durch die Verwendung von Zitronensäure und/oder Lävolinsäure oder anstelle dieser Entwicklung ein Gel durch den Zusatz eines Geliermittels erzeugt. Das Geliermittel entwickelt mit Wasser beim Granulieren eine Gelstruktur, in der die Feststoffteilchen eingefangen und lokalisiert werden. Dabei darf der Anteil des Geliermittels aber nur so hoch sein, dass sich im daraus entstehenden Gel die Feststoffteilchen gegenseitig noch abstützen können und die Reaktionsmittel zur Reaktion aufeinander treffen.

Als Geliermittel werden vorzugsweise an sich bekannte polymere Geliermittel verwendet wie Geliermittel aus Biopolymeren, z.B. Polysaccharide wie Agar-Agar, modifizierte Stärke z.B. aus Mais, Reis oder Kartoffeln und/oder Pektin und/oder Methylcellulose. Nach der Erfindung kann aber auch ein bereits vorhandenes bzw. angemachtes Gel dem Granulierprozess zugesetzt werden. Verwendbar sind z.B. Stärke oder Methylcellulose aufweisender Tapetenkleister.

Die Viskosität der Gele wird erfindungsgemäß so eingestellt, dass die Gasblasenbildung relativ zwanglos erfolgen kann, wobei sich die Gasblasen auch im Gel bilden. Insofern wird erfindungsgemäß ein viskoelastisches Verhalten des Gels eingestellt bzw. ein Gel mit viskoelastischem Verhalten beigegeben.

Ein zu granulierendes Ausgangsgemenge enthält vorzugsweise mindestens ein Geliermittel in Mengen von 1 bis 40, insbesondere 6 bis 32 Gew.-%.

Zur Steuerung des Reaktionszeitpunkts der Reaktionsmittel werden zweckmäßigerweise Reaktionsmittel verwendet, von denen zumindest eines umhüllt oder getränkt ist. Umhüllungsmittel oder Tränkungsmittel sind Stoffe, die zwar mit Wasser reagieren, die aber zur Lösung mit Wasser eine vorbestimmte Zeit benötigen, so dass die Reaktion der Reaktionsmittelzeit verzögert beginnt. Dies ist insbesondere zweckmäßig, wenn ein Geliermittel verwendet oder ein bereits vorliegendes Gel untergemischt werden soll. In diesen Fällen soll die Reaktion der Reaktionsmittel erst erfolgen, wenn ein Gel mit der gewünschten Viskosität vorliegt.

Umhüllungs- und Tränkungsmittel sind z.B. Hydrophobierungsmittel auf Basis wasserlöslicher Salze, wasserlösliche polyethersiloxane.

Mit dem erfindungsgemäßen Verfahren, bei dem ein Geliermittel oder ein fertiges Gel verwendet wird, lassen sich Granalien mit Schüttdichten < 1000, insbesondere 450 bis 600 kg/m³ herstellen.

In den granulierten Granalien ist die Gelstruktur im Steggerüst vorhanden und unterstützt die Festigkeit des Steggerüsts. Durch Tempern oder Brennen der Granalien kann der Gelbestandteil verflüchtigt werden, weil durch das Tempern und Brennen die Festigkeit der Granalie durch Reaktionsprodukte aus den Temperaturbehandlungen resultiert.

## Patentansprüche

1. Verfahren zur Herstellung feuerfester Leichtgranalien aus mindestens einem mehlförmigen feuerfesten Werkstoff < 500 µm und einem mehlförmigen Bindemittel < 150 µm und/oder flüssigen Bindemittel in einem Nassgranulator, wobei
a) Reaktionsmittel in dem zu granulierenden Stöffgemenge enthalten sind und/oder während des Granulierens den zu granulierenden Stoffgemenge zugeführt werden, die mindestens einen Carbonat haltigen Reaktionsstoff und mindestens einen mit dem Reaktionsstoff über eine flüssige Phase reagierenden, CO₂ bildenden Reaktionspartnerstoff aufweisen und
b) während des Granulierens dem zu granulierenden Stoffgemenge Wasser und/oder wässrige Lösungen zugesprüht und/oder zugedüst werden, so dass während des Granulierens in den Granalien durch Gasbildung Poren gebildet werden, die durch das die Poren umgebende erhärtende Feststoffgerüst aus Bindemittel und Werkstoffmaterial fixiert werden.

2. Verfahren nach Anspruch 1,
**dadurch gekennzeichnet, dass**
folgende Zusammensetzungen der Reaktionsmittel verwendet werden, berechnet als trockene pulverfömige Stoffe:
Reaktionsstoffe:
75 bis 99 Gew.-%, insbesondere 80 bis 97 Gew.-%
Reaktionspartnerstoffe:
1 bis 15 Gew.-%, insbesondere 3 bis 10 Gew.-%
Bindemittel:
0 bis 10 Gew.-%, insbesondere 1 bis 5 Gew.-%,
wobei insbesondere mit einer Granalienfeuchte der Granalien bis 30 Gew.-%, vorzugsweise zwischen 10 und 15Gew.-% gearbeitet wird.

3. Verfahren nach Anspruch 1 und/oder 2,
**dadurch gekennzeichnet , dass**
als Reaktionsstoff Kalksteinmehl und/oder eine dieses enthaltende Suspension und/oder Magnesitmehl und/oder eine dieses enthaltende wässrige Suspension und/oder Dolomitmehl und/oder eine dieses enthaltende wässerige Suspension und/oder pulverförmiges Natriumcarbonat und/oder eine wässrige Natriumcarbonatlösung und/oder pulverförmiges Natriumhydrogencarbonat und/oder eine wässrige Natriumhydrogencarbonatlösung und/oder pulverförmiges Magnesiumhydrogencarbonat und/oder eine wässrige Magnesiumhydrogencarbonatlösung und/oder pulverförmiges Ammoniumcarbonat und/oder eine wässrige Ammoniumcarbonatlösung und/oder pulverförmiges Ammoniumhydrogencarbonat und/oder eine wässrige Ammoniumcarbonatlösung und/oder pulverförmige Zitronensäure und/oder eine Zitronensäurelösung und/oder pulverförmige Oxalsäure und/oder Borsäure und/oder Weinsäure und/oder Apfelsäure und/oder wässrige Lösungen jeweils davon verwendet werden.

4. Verfahren nach einem oder mehreren der Ansprüche 1 bis 3,
**dadurch gekennzeichnet , dass**
als Bindemittel mindestens ein Mehl und/oder mindestens eine Suspension aus Bindemittelton, Tonerdezement, Portlandzement, Wasserglas, insbesondere Natronwasserglas, Novolakharz, Pechbinder, Zucker, Stärke, wie Reisstärke, Maisstärke, Kartoffelstärke, Mikrosilika, Phosphate, insbesondere Aluminumphosphate, Phosphorsäure, Borsäure, Magnesiumchlorid, Magnesiumsulfat, Polyvinylalkohol, Silika-Gel, Ethylsilikat, Wachse und/oder Sulfidablauge verwendet werden.

5. Verfahren nach einem oder mehreren der Ansprüche 1 bis 4,
**dadurch gekennzeichnet , dass**
die wässrigen Reaktionsstoffsuspensionen und/oder die wässrigen Reaktionspartnerlösungen zusammen mit dem Granulierwasser zugesprüht und/oder zugedüst werden.

6. Verfahren nach einem oder mehreren der Ansprüche 1 bis 5,
**dadurch gekennzeichnet , dass**
Wasserdampf mit Temperaturen zwischen 100 und 150, insbesondere zwischen 105 und 110°C zum Granulieren verwendet wird.

7. Verfahren nach einem oder mehreren der Ansprüche 1 bis 6,
**dadurch gekennzeichnet , dass**
das Reaktionsmittel in stöchiometrischen Mengen bezüglich des Reaktionsstoffs und des Reaktionspartnerstoffs verwendet wird.

8. Verfahren nach einem oder mehreren der Ansprüche 1 bis 7,
**dadurch gekennzeichnet , dass**
als feuerfester Werkstoff mindestens ein feuerfester Grundstoff aus einem feuerfesten Grundoxyd und/oder mindestens eine feuerfeste Kohlenstoffmodifikation und/oder mindestens eine feuerfeste Verbindung aus feuerfesten Grundstoffen und/oder feuerfesten Grundstoffen und Kohlenstoffmodifikationen und/oder gemahlene feuerfeste Erzeugnisse, insbesondere gemahlene feuerfeste Abfallerzeugnisse und/oder mindestens ein Rohstoff zur Herstellung feuerfester Erzeugnisse verwendet wird.

9. Verfahren nach einem oder mehreren der Ansprüche 1 bis 8,
**dadurch gekennzeichnet , dass**
die Granalien bei Temperaturen bis 600, insbesondere zwischen 60 und 500°C getempert werden und/oder bei Temperaturen bis 1700°C, insbesondere bis 1500°C, vorzugsweise zwischen 1000 und 1400°C keramisch gebrannt werden.

10. Verfahren nach einem oder mehreren der Ansprüche 1 bis 9,
**dadurch gekennzeichnet , dass**
Granalien ausschließlich aus mindestens einem Reaktionsmittel mit der zusammensetzung gemäß Anspruch 2 hergestellt werden.

11. Verfahren nach einem oder mehreren der Ansprüche 1 bis 10, **dadurch gekennzeichnet , dass** Granalien aus mindestens einem feuerfesten Werkstoff und mindestens einem Reaktionsmittel hergestellt werden, wobei das Reaktionsmittel in Mengen zwischen 76 und 100, insbesondere zwischen 83 und 97 Gew.-%, bezogen auf die Trockensubstanz des zu granulierenden Gemenges verwendet wird.

12. Verfahren nach einem oder mehreren der Ansprüche 1 bis 11,
**dadurch gekennzeichnet, dass**
als feuerfester Werkstoff mindestens ein Werkstoff aus der folgenden Gruppe verwendet wird:
Magnesia, Doloma, Calcia, SiO₂, Al₂O₃ Cr₂O₃.

13. Verfahren nach einem oder mehreren der Ansprüche 1 bis 12,
**dadurch gekennzeichnet , dass**
ein Reaktionsmittel verwendet wird, bei dem entweder der Reaktionsstoff oder der Reaktionspartnerstoff oder beide Stoffe eine Umhüllung oder Tränkung mit einem Mittel aufweisen, das sich in Wasser löst und erst nach der Lösung die Reaktionspartner des Reaktionsmittels zur Gasbildung freigibt, wobei vorzugsweise als Mittel zur Umhüllung oder Tränkung Hydrophobierungsmittel auf Basis wasserlöslicher Salze und/oder wasserlösliche Polyethersiloxane verwendet wird.

14. Verfahren nach einem oder mehreren der Ansprüche 1 bis 13,
**dadurch gekennzeichnet , dass**
zusätzlich ein mit Wasser ein Gel bildendes Geliermittel oder ein bereits hergestelltes Gel verwendet wird, wobei vorzugsweise als Geliermittel ein polymeres Geliermittel, insbesondere mindestens ein Biopolymer, z.B. ein Polysaccharid wie Agar-Agar, modifizierte Stärke, z.B. aus Mais, Reis oder Kartoffeln und/oder Pektin und/oder Methylcellulose, insbesondere in Mengen von 1 bis 40 %, insbesondere von 6 bis 32 Gew.-% bezogen auf die Trockensubstanz des zu granulierenden Gemenges verwendet wird und vorzugsweise das Gel Tapetenkleister ist.

15. Aus einem feuerfesten Werkstoff granulierte feuerfeste Leichtgranalie, insbesondere hergestellt nach einem Verfahren nach einem oder mehreren der Ansprüche 1 bis 14,
**gekennzeichnet durch** eine Gasblasenporenstruktur mit überwiegend (über 50 %) geschlossenen Poren, deren Poren von einem Werkstoff-Steggerüst oder einem Bindemittel-Werkstoff-Steggerüst umgeben sind, wobei im Steggerüst vorzugsweise ein Trockengelstoff enthalten ist.

16. Granalien nach Anspruch 15,
**gekennzeichnet durch** ein Porenvolumen zwischen 45 und 80, insbesondere zwischen 55 und 75 Vol.% und/oder **durch** Porengrößen zwischen 10 und 600, insbesondere zwischen 30 und 300 µm.

17. Granalien nach einem oder mehreren der Ansprüche 15 und/oder 16,
**gekennzeichnet durch** Korngrößen der Granalien zwischen 0,2 und 10, insbesondere zwischen 0,5 und 7 mm und/oder **durch** rohstoff- und fraktionsabhängige Schüttgewichte nach DIN 51110 zwischen 300 und 1000, insbesondere zwischen 400 und 800 kg/m³.

18. Granalien nach einem oder mehreren der Ansprüche 15 bis 17,
**gekennzeichnet durch** eine Agglomeration bzw. "Brombeer"-Struktur, bei der mehrere gebildete Granalien über Bindemittel- und/oder Bindemittel-Werkstoff-Brücken zusammengekittet sind und/oder **durch** eine gute Vereinzelung der Granulatkörner.

19. Granalien nach einem oder mehreren der Ansprüche 15 bis 18,
**dadurch gekennzeichnet , dass** sie mindestens einen Werkstoff aus der folgenden Grundstoffgruppe aufweist:
SiO₂. Al₂O₃, MgO, CaO, Cr₂O₃ und ZrO₂ sowie feuerfeste Kohlenstoffmodifikationen und Verbindungen aus den feuerfesten Grundstoffen und Verbindungen aus den feuerfesten Grundstoffen mit Kohlenstoff.

20. Granalien nach einem oder mehreren der Ansprüche 15 bis 19,
**dadurch gekennzeichnet , dass**
sie als Bindemittel mindestens ein Bindemittel aus der folgenden Gruppe aufweisen:
Bindeton, Tonerdezement, Portlandzement, Wasserglas, Novolakharz, Pechbinder, Zucker, Stärken, Mikrosilika, Phosphate, insbesonderre Aluminiumphosphate, Phosphorsäure, Borsäure, Magnesiumchlorid, Magnesiulsulfat, Polyvinylalkohol, Silika-Gel, Ethylsilikat, Wachse und/oder Sulfidablauge.

21. Granalien nach einem oder mehreren der Ansprüche 15 bis 20,
**dadurch gekennzeichnet , dass**
sie erhärtet, getrocknet, getempert oder keramisch gebrannt sind, insbesondere eine Sinterbindung aufweisen.

22. Granalien nach Anspruch 15 bis 21,
**dadurch gekennzeichnet , dass**
sie eine Kohlenstoffbindung aufweisen.

## Claims

1. Process for producing lightweight refractory granules from at least one meal-like refractory material < 500 µm and a meal-like binder < 150 µm and/or liquid binder in a wet granulator, where
a) reaction media which comprise at least one carbonate-containing reactant and at least one reaction partner which reacts with the reactant via a liquid phase to form CO₂ are present in the mixture to be granulated and/or are added to the mixture to be granulated during granulation and
b) water and/or aqueous solutions are sprayed and/or atomized onto the mixture to be granulated during granulation so that pores are formed in the granules by gas formation during granulation and are fixed by the hardening solid framework of binder and material surrounding the pores.

2. Process according to Claim 1, **characterized in that** the following compositions of the reaction media, calculated as dry pulverulent materials, use
reactants:
from 75 to 99% by weight, in particular from 80 to 97% by weight,
reaction partners:
from 1 to 15% by weight, in particular from 3 to 10% by weight,
binders:
from 0 to 10% by weight, in particular from 1 to 5% by weight,
where, in particular, a moisture content of the granules of up to 30% by weight, preferably in the range from 10 to 15% by weight is employed.

3. Process according to Claim 1 and/or 2, **characterized in that** ground limestone and/or a suspension containing this and/or ground magnesite and/or an aqueous suspension containing this and/or ground dolomite and/or an aqueous suspension containing this and/or pulverulent sodium carbonate and/or an aqueous sodium carbonate solution and/or pulverulent sodium hydrogencarbonate and/or an aqueous sodium hydrogencarbonate solution and/or pulverulent magnesium hydrogencarbonate and/or an aqueous magnesium hydrogencarbonate solution and/or pulverulent ammonium carbonate and/or an aqueous ammonium carbonate solution and/or pulverulent ammonium hydrogencarbonate and/or an aqueous ammonium carbonate solution and/or pulverulent citric acid and/or a citric acid solution and/or pulverulent oxalic acid and/or boric acid and/or tartaric acid and/or malic acid and/or aqueous solutions of each of these are used as reactant.

4. Process according to one or more of Claims 1 to 3, **characterized in that** at least one meal and/or at least one suspension of binder clay, high-alumina cement, Portland cement, water glass, in particular sodium water glass, novolak resin, pitch binder, sugar, starch such as rice starch, maize starch, potato starch, microsilica, phosphates, in particular aluminium phosphates, phosphoric acid, boric acid, magnesium chloride, magnesium sulphate, polyvinyl alcohol, silica gel, ethyl silicate, waxes and/or waste sulphide liquors are used as binder.

5. Process according to one or more of Claims 1 to 4, **characterized in that** the aqueous reactant suspensions and/or the aqueous reaction partner solutions are sprayed in and/or atomized in together with the granulation water.

6. Process according to one or more of Claims 1 to 5, **characterized in that** steam having temperatures in the range from 100 to 150°C, in particular from 105 to 110°C, is used for granulation.

7. Process according to one or more of Claims 1 to 6, **characterized in that** the reaction medium is used in stoichiometric amounts in respect of the reactant and the reaction partner.

8. Process according to one or more of Claims 1 to 7, **characterized in that** at least one refractory raw material composed of a refractory oxide and/or at least one refractory carbon modification and/or at least one refractory compound of refractory raw materials and/or refractory raw materials and carbon modifications and/or ground refractory products, in particular ground refractory scrap products and/or at least one raw material for producing refractory products is used as refractory material.

9. Process according to one or more of Claims 1 to 8, **characterized in that** the granules are heat treated at temperatures of up to 600°C, in particular in the range from 60 to 500°C, and/or are ceramic-fired at temperatures of up to 1700°C, in particular up to 1500°C, preferably in the range from 1000 to 1400°C.

10. Process according to one or more of Claims 1 to 9, **characterized in that** granules are produced exclusively from at least one reaction medium having the composition according to Claim 2.

11. Process according to one or more of Claims 1 to 10, **characterized in that** granules are produced from at least one refractory material and at least one reaction medium, where the reaction medium is used in amounts in the range from 76 to 100% by weight, in particular from 83 to 97% by weight, based on the dry weight of the mixture to be granulated.

12. Process according to one or more of Claims 1 to 11, **characterized in that** at least one material from the following group:
magnesia, doloma, calcia, SiO₂ Al₂O₃, Cr₂O₃,
is used as refractory material.

13. Process according to one or more of Claims 1 to 12, **characterized in that** a reaction medium in which either the reactant or the reaction partner or both have a shell or impregnation of/with an agent which dissolves in water and releases the reaction partner of the reaction medium to form gas only after dissolution is used, where hydrophobicizing agents based on water-soluble salts and/or water-soluble polyethersiloxanes is preferably used as agent for envelopment or impregnation.

14. Process according to one or more of Claims 1 to 13, **characterized in that** a gelling agent which forms a gel with water or a previously produced gel is additionally used, where a polymeric gelling agent, in particular at least one biopolymer, e.g. a polysaccharide such as agar-agar, modified starch, e.g. from maize, rice or potatoes, and/or pectin and/or methylcellulose is preferably used as gelling agent, in particular in amounts of from 1 to 40%, in particular from 6 to 32% by weight, based on the dry weight of the mixture to be granulated, and the gel is preferably wallpaper paste.

15. Lightweight refractory granules granulated from a refractory material, in particular produced by a process according to one or more of Claims 1 to 14, **characterized by** a gas bubble pore structure having predominantly (more than 50%) closed pores surrounded by a material strut framework or a binder material strut framework, where a dry gel material is preferably present in the strut framework.

16. Granules according to Claim 15, **characterized by** a pore volume in the range from 45 to 80% by volume, in particular from 55 to 75% by volume, and/or pore sizes in the range from 10 to 600 µm, in particular from 30 to 300 µm.

17. Granules according to one or more of Claims 15 and/or 16, **characterized by** particle sizes of the granules in the range from 0.2 to 10 mm, in particular from 0.5 to 7 mm, and/or by raw material- and fraction-dependent bulk densities in accordance with DIN 51110 in the range from 300 to 1000 kg/m³, in particular from 400 to 800 kg/m³.

18. Granules according to one or more of Claims 15 to 17, **characterized by** an agglomerated or "blackberry" structure in which a plurality of formed granules are bound together via a binder and/or binder-material bridges and/or by good separation of the individual granules.

19. Granules according to one or more of Claims 15 to 18, **characterized in that** they comprise at least one material from the following raw materials group:
SiO₂ Al₂O₃, MgO, CaO, Cr₂O₃ and ZrO₂ and refractory carbon modifications and compounds of the refractory raw materials and compounds of the refractory raw materials with carbon.

20. Granules according to one or more of Claims 15 to 19, **characterized in that** they comprise at least one binder from the following group as binder:
binder clay, high-alumina cement, Portland cement, water glass, novolak resin, pitch binder, sugar, starches, microsilica, phosphates, in particular aluminium phosphates, phosphoric acid, boric acid, magnesium chloride, magnesium sulphate, polyvinyl alcohol, silica gel, ethyl silicate, waxes and/or waste sulphide liquor.

21. Granules according to one or more of Claims 15 to 20, **characterized in that** they are hardened, dried, heat-treated or ceramically fired, in particular are bonded by sintering.

22. Granules according to any of Claims 15 to 21, **characterized in that** they are bonded by carbon.

## Revendications

1. Procédé pour la fabrication de granulés légers réfractaires en au moins un matériau réfractaire en poudre < 500 µm et un liant en poudre < 150 µm et/ou un liant liquide dans un granulateur humide, dans lequel
a) des moyens de réaction sont contenus dans le mélange de matière à granuler et/ou sont ajoutés pendant la granulation au mélange de matière à granuler, lesquels comportent au moins un réactant contenant du carbonate et au moins un partenaire de réaction réagissant avec le réactant par l'intermédiaire d'une phase liquide, formant du CO₂ et
b) pendant la granulation, de l'eau et/ou des solutions aqueuses sont ajoutées par pulvérisation ou par giclage au mélange de matière à granuler, de telle sorte que pendant la granulation, des pores sont formés dans les granulés par formation de gaz, pores qui sont fixés par le squelette de solide en voie de durcissement, constitué de liant et de matériau, qui entoure les pores.

2. Procédé selon la revendication 1,
**caractérisé en ce que**
les compositions suivantes des moyens de réaction sont utilisées, calculées comme produits en poudre secs :
réactants :
75 à 99 % en poids, en particulier 80 à 97 % en poids,
partenaires de réaction :
1 à 15 % en poids, en particulier 3 à 10 % en poids,
liants :
0 à 10 % en poids, en particulier 1 à 5 % en poids,
dans lequel on travaille en particulier avec une humidité des granulés jusqu'à 30 % en poids, de préférence entre 10 et 15 % en poids.

3. Procédé selon la revendication 1 et/ou 2,
**caractérisé en ce que**
comme réactant, sont utilisés de la poudre de calcaire et/ou une suspension la contenant et/ou de la poudre de magnésite et/ou une suspension aqueuse la contenant et/ou de la poudre de dolomie et/ou une suspension aqueuse la contenant et/ou du carbonate de sodium pulvérulent et/ou une solution aqueuse de carbonate de sodium et/ou de l'hydrogénocarbonate de sodium pulvérulent et/ou une solution aqueuse d'hydrogénocarbonate de sodium et/ou de l'hydrogénocarbonate de magnésium pulvérulent et/ou une solution aqueuse d'hydrogénocarbonate de magnésium et/ou du carbonate d'ammonium pulvérulent et/ou une solution aqueuse de carbonate d'ammonium et/ou de l'hydrogénocarbonate d'ammonium pulvérulent et/ou un solution aqueuse de carbonate d'ammonium et/ou de l'acide citrique pulvérulent et/ou une solution d'acide citrique et/ou de l'acide oxalique et/ou de l'acide borique et/ou de l'acide tartrique et/ou de l'acide malique pulvérulents et/ou des solutions aqueuses respectives de ces derniers.

4. Procédé selon une ou plusieurs des revendications 1 à 3, **caractérisé en ce que**
comme liant sont utilisés au moins une poudre et/ou au moins une suspension de liant d'argile, de ciment d'argile, de ciment Portland, de verre soluble, en particulier de verre soluble sodique, de résine Novolaque, de liant de poix, de sucre, d'amidon, comme de l'amidon de riz, de l'amidon de maïs, de l'amidon de pomme de terre, de silice microscopique, de phosphates, en particulier de phosphates d'aluminium, d'acide phosphorique, d'acide borique, de chlorure de magnésium, de sulfate de magnésium, d'alcool polyvinylique, de silicagel, de silicate d'éthyle, de cires et/ou de la liqueur blanche.

5. Procédé selon une ou plusieurs des revendications 1 à 4; **caractérisé en ce que**
les suspensions aqueuses de réactants et/ou les solutions aqueuses de partenaires réactionnels sont ajoutées par pulvérisation et/ou par giclage avec l'eau de granulation.

6. Procédé selon une ou plusieurs des revendications 1 à 5, **caractérisé en ce que**
de la vapeur d'eau à des températures comprises entre 100 et 150, en particulier entre 105 et 110°C, est utilisée pour la granulation.

7. Procédé selon une ou plusieurs des revendications 1 à 6, **caractérisé en ce que**
le moyen de réaction est utilisé en des quantités stoechiométriques en ce qui concerne le réactant et le partenaire de réaction.

8. Procédé selon une ou plusieurs des revendications 1 à 7, **caractérisé en ce que**
comme matériaux réfractaires sont utilisés au moins un matériau de base réfractaire en un oxyde de base réfractaire et/ou au moins une modification réfractaire de carbone et/ou au moins un composé réfractaire en matériaux de base réfractaires et/ou en matériaux de base réfractaires et en modifications de carbone, et/ou des produits réfractaires broyés, en particulier des produits réfractaires broyés de rebut et/ou au moins une matière première pour la fabrication de produits réfractaire.

9. Procédé selon une ou plusieurs des revendications 1 à 8; **caractérisé en ce que**
les granulés sont recuits à des températures jusqu'à 600, en particulier entre 60 et 500°C et/ou sont cuits en céramique à des températures jusqu'à 1700°C, en particulier jusqu'à 1500°C, de préférence entre 1000 et 1400°C.

10. Procédé selon une ou plusieurs des revendications 1 à 9, **caractérisé en ce que**
les granulés sont fabriqués exclusivement en au moins un moyen de réaction avec la composition d'après la revendication 2.

11. Procédé selon une ou plusieurs des revendications 1 à 10, **caractérisé en ce que**
les granulés sont fabriqués en au moins un matériau réfractaire et au moins un moyen de réaction, le moyen de réaction étant utilisé en des quantités comprises entre 76 et 100, en particulier entre 83 et 97 % en poids, rapportées à la substance sèche du mélange à granuler.

12. Procédé selon une ou plusieurs des revendications 1 à 11, **caractérisé en ce que**
comme matériau réfractaire, on utilise au moins un matériau du groupe suivant :
magnésie, dolomie, chaux, SiO₂, Al₂O₃, Cr₂O₃.

13. Procédé selon une ou plusieurs des revendications 1 à 12, **caractérisé en ce que**
l'on utilise un moyen de réaction pour lequel soit le réactant, soit le partenaire de réaction, soit encore les deux substances présentent un enrobage ou une imprégnation avec un agent qui se dissout dans l'eau et seulement après la dissolution, libère les partenaires réactionnels du moyen de réaction pour la formation de gaz, des agents hydrophobants sur la base de sels solubles dans l'eau et/ou de polyéthersiloxanes solubles dans l'eau étant utilisés de préférence comme moyen d'enrobage ou d'imprégnation.

14. Procédé selon une ou plusieurs des revendications 1 à 13, **caractérisé en ce que**
un gélifiant formant un gel avec de l'eau, ou un gel déjà préparé est en outre utilisé, dans lequel un gélifiant polymère, en particulier au moins un biopolymère, par exemple un polysaccharide comme de l'agar-agar, de l'amidon modifié, par exemple de maïs, de riz ou de pommes de terre et/ou de la pectine et/ou de la méthylcellulose, en particulier en des quantités de 1 à 40 %, en particulier de 6 à 32 % en poids, quantités rapportées à la substance sèche de la dispersion à granuler est utilisé de préférence comme gélifiant, et **en ce que** le gel est de préférence de la colle pour papiers peints.

15. Granulés légers réfractaires, granulés en un matériau réfractaire, en particulier fabriqués selon un procédé d'après une ou plusieurs des revendications 1 à 14,
**caractérisés par** une structure à pores par bulles de gaz avec essentiellement (plus de 50 %) des pores fermés, structure dont les pores sont entourés d'un squelette de traverses du matériau ou d'un squelette de traverses de liant et de matériau, sachant que dans le squelette de traverses est contenu de préférence un matériau de gel sec.

16. Granulés selon la revendication 15,
**caractérisés par** un volume de pores compris entre 45 et 80, en particulier entre 55 et 75 % en volume et/ou par des tailles de pores comprises entre 10 et 600, en particulier entre 30 et 300 µm.

17. Granulés selon une ou plusieurs des revendications 15, et/ou 16,
**caractérisés par** des tailles de grain des granulés comprises entre 0,2 et 10, en particulier entre 0,5 et 7 mm et/ou par des poids en vrac selon la norme DIN 51110, en fonction de la matière première et de la fraction, compris entre 300 et 1000, en particulier entre 400 et 800 kg/m³.

18. Granulés selon une ou plusieurs des revendications 15 à 17,
**caractérisés par** une agglomération, respectivement une structure en mûres, pour laquelle plusieurs granulés formés par des ponts de liant et/ou des ponts de liant et de matériau sont collés ensemble, et/ou par une bonne séparation unitaire des grains de granulé.

19. Granulés selon une ou plusieurs des revendications 15 à 18, **caractérisés en ce que**
ils comportent au moins un matériau parmi le groupe des substances de base suivantes :
SiO₂, Al₂O₃, MgO, CaO, Cr₂O₃ et ZrO₂, ainsi que des modifications réfractaires du carbone, des composés de matériaux de base réfractaires, et des composés de matériaux de base réfractaires avec du carbone.

20. Granulés selon une ou plusieurs des revendications 15 à 19, **caractérisés en ce que**
ils comportent comme liant au moins un liant du groupe suivant :
argile de liaison, ciment d'argile, ciment Portland, verre soluble, résine Novolaque, liant de poix, sucre, amidon, silice microscopique, phosphates, en particulier phosphates d'aluminium, acide phosphorique, acide borique, chlorure de magnésium, sulfate de magnésium, alcool polyvinylique, silicagel, silicate d'éthyle, cires et/ou liqueur blanche.

21. Granulés selon une ou plusieurs des revendications 15 à 20, **caractérisés en ce que**
ils sont durcis, séchés, recuits ou cuits en céramique, en particulier **en ce qu'**ils comportent une liaison de frittage.

22. Granulés selon les revendications 15 à 21,
**caractérisés en ce qu'**ils comportent une liaison carbone.
